# EUROPÄISCHE PATENTSCHRIFT

(11) **EP 1 768 201 B1**
(45) Veröffentlichungstag und Bekanntmachung des Hinweises auf die Patenterteilung: **02.09.2015**
(21) Anmeldenummer: 06019138.4
(22) Anmeldetag: 13.09.2006
(51) Int. Cl.: H01M 2/30, H01M 2/06, H01M 2/04

(54) **Bleibatterie und Kunststoff-Batteriedeckel hierzu**
Lead-acid accumulator and a plastic lid therefor
Accumulateur au plomb et un couvercle en plastique pour cette accumulateur

(30) Priorität: 27.09.2005 DE 102005046256
(43) Veröffentlichungstag der Anmeldung: 28.03.2007
(73) Patentinhaber: Johnson Controls Autobatterie GmbH & Co. KGaA, 30419 Hannover (DE)
(72) Erfinder: Richter, Gerolf, 31139 Hildesheim (DE); Streuer, Peter, 30559 Hannover (DE); Sielemann, Olaf, 63607 Wächtersbach (DE); Schirmer, Hans-Heinrich, 31552 Roderberg (DE)
(74) Vertreter: Meissner, Bolte & Partner GbR

(56) Entgegenhaltungen:
- EP-A1- 0 601 268
- EP-A1- 1 347 522
- WO-A-99/07029
- DE-B1- 1 671 999
- DE-C1- 3 230 628

## Beschreibung

Die Erfindung betrifft einen Kunststoff-Batteriedeckel zum Verschließen eines Batteriegehäuses mit einer im auf das Batteriegehäuse aufgesetzten Zustand in das Batteriegehäuse weisenden Unterseite und einer gegenüberliegenden Oberseite, und mit mindestens einem durch den Batteriedeckel geführten metallischen Anschlusspolelement.

Die Erfindung betrifft weiterhin eine Bleibatterie mit einem in Zellen unterteilten Kunststoffgehäuse, einer Vielzahl von Elektrodenplatten in den Zellen des Kunststoffgehäuses und mit Elektrolyt in den Zellen.

Bei der Herstellung von Batterien stellt ein besonderes Problem die Ausführung dichter und dicht bleibender Durchführungen z.B. für Polanschlüsse und Zellenverbinder dar. Die Durchführungen müssen preiswert und einfach herstellbar sein und dem hochkriechfähigen Elektrolyten standhalten können. Hierzu werden in der Regel Bleibuchsen als Poldurchführungen in den Batteriedeckel oder in die Zellenwände eingepresst oder eingespritzt.

Dabei ist trotz unterschiedlicher Wärmeausdehnungskoeffizienten von Metall und Kunststoff ein fester Sitz zu gewährleisten. Hinzu kommen weitere Probleme durch die Anwesenheit von Säure innerhalb und während der Batterieherstellung.

Aus der DE 1 671 999 ist eine Poldurchführung in Form einer Bleibuchse mit Labyrinthringen beschrieben, bei der in den Labyrinthringen umlaufende oder unterbrochene Hinterschneidungen vorgesehen sind. Die Labyrinthringe haben an ihren Außendurchmessern Verdrehsicherungen. Die erforderliche Dichtung für Gas und Säure wird einerseits durch die Verschweißung der Anschlusspole mit den Polbuchsen und andererseits durch die Umspritzung des unteren Teils der Polhülse erreicht. Die Dichtigkeit zwischen Kunststoff und Polhülse wird durch die labyrinthförmige Ausführung mit möglichst glatten (metallisch blanken) Oberflächen im Zusammenwirken mit dem drei-achsigen Schrumpf des Kunststoffs bei der Spritzgussfertigung der Batteriedeckel erreicht.

Aus der DE 42 41 393 C2 ist ein Anschlusspol für einen Akkumulator bekannt, bei dem die Rippen des Labyrinths widerhakenförmig ausgeführt sind. Auch bei einer Erwärmung verlieren sie damit ihre Dichtwirkung über ein weites Temperaturintervall nicht.

In diesem Zusammenhang hat sich ein Einbettverfahren durchgesetzt, bei dem der Kunststoffanspritzpunkt in der Nähe der Poldurchführung liegt, so dass diese Zone zuletzt erstarrt und damit einen optimalen Anpressschrumpf des Kunststoffs gewährleistet. Um dieser Art der Polbuchsendurchführung eine gewisse Widerstandsfähigkeit gegen tordiertes Verdrehen zu geben, sind die Polbuchsen auf der Höhe der Batterie außen auf der Oberfläche mit einer in den Hülsenring angebrachten Verzahnung versehen.

Ein Problem besteht nun darin, dass in dem Bereich der jeweils am Ende des Polbuchsenlabyrinths befindlichen Füge- bzw. Trennlinie zwischen Kunststoff und Metall ein drei-dimensionaler Schrumpf nicht gewährleistet werden kann. Dies gilt insbesondere für die nach außen gerichtete Oberfläche des Batteriedeckels mit dem schon für den zwei-dimensionalen Dichtschrumpf des Kunststoffs problematischen Bereich des Verdrehschutzes.

Die Folge ist ein, wenn auch nur örtlich kurzes und begrenztes Eindringen von Säure in einem nur µ-Meter breiten Spalt sowie der Verbleib der Säure trotz intensivster Bemühungen einer Reinigung.

Wird nun nach Einbau der Batterie in ein Fahrzeug zur elektrischen Kontaktierung die Polklemme auf die Polbuchse gesetzt und verschraubt, kann es bei Anwesenheit von Wasser zum Eindringen von Säure an den Grundstoff Messing aufgrund von Rissen in der Polklemmenverzinnung kommen. Dies führt dazu, dass sich der Messing-Grundkörper der Polklemme durch Auslösen von Zink zersetzt.

Zur Lösung dieses Problems kann das später mit Kunststoff zu spritzende Polbuchsenlabyrinth vorab mit einem Haftvermittler oder durch Pulverbeschichtung behandelt werden. Dies führt jedoch zu höheren Kosten.

Eine solche Herstellung einer gas- und flüssigkeitsdichten Polabdichtung eines Bleiakkumulators ist in der DE 32 30 628 C1 und DE 1 213 904 A offenbart. Dort ist die Poloberfläche mit einer Dichtsubstanz oder einem Klebemittel beschichtet, auf das Kautschuk aufgebracht wird.

DE 2 263 409 offenbart eine Akkumulatorenbatterie mit in einem Stück ausgeführten Endpolen, die als Einlage in eine Gießform platziert und beim Spritzgussvorgang mit in das Kunststoff des Kunststoffdeckels eingespritzt werden. Zur Absichtung ist der Endpol mit einem Flansch versehen.

Auch EP 1 347 522 und WO 99/07029 offenbaren Poldichtungen.

Aufgabe der Erfindung ist es daher, einen verbesserten Kunststoff-Batteriedeckel mit einem verbesserten Übergang zwischen Kunststoff und Anschlusspolelement zu schaffen.

Die Aufgabe wird mit dem Kunststoffbafteriedeckel der eingangs genannten Art dadurch gelöst, dass der Bereich zwischen dem mindestens einen Anschlusspolelement und der Oberseite des Batteriedeckels derart angepasst ist, dass nach der Volumenreduktion von Kunststoff in diesem Bereich bei der Spritzgussherstellung des Batteriedeckels ein Spalt zwischen Anschlusspolelement und angrenzendem Kunststoff des Batteriedeckels an der Oberseite verhindert wird. Bei der Konstruktion wird somit erfindungsgemäß der drei-dimensionale Schrumpf, d.h. die Volumenreduzierung in der Ebene des Batteriedeckels und in Richtung zwischen Oberseite und Unterseite des Batteriedeckels ausgenutzt, um einen spaltfreien Anschluss zwischen Batteriedeckel und Anschlusspolelement zu gewährleisten.

Eine besonders einfache Ausführungsform sieht vor, dass die jeweils vom Umfang eines Anschlusspolelementes hervorragende Anschlussflanke, die angrenzend an die Oberfläche des Batteriedeckels angeordnet ist, an ihrem Außenumfang eine mindestens teilweise umlaufende Nut hat. Bei der Spritzgussfertigung des Batteriedeckels dringt Kunststoff in die Nut ein, so dass die Tiefe eines möglicherweise entstehenden Spalts an der Trennlinie zwischen dem Metall des Anschlusspolelements und dem Kunststoff des Batteriedeckels reduziert wird.

Dies kann durch Veränderung des Labyrinthgeometrie erreicht werden, mit dem Ziel, auch an der Trennlinie zwischen Kunststoff des Batteriedeckels und Metall des Anschlusspolelementes, die sich auf der Batterieaußenseite befindet, den drei-achsigen Schrumpf des Kunststoffs bei der Spritzgussfertigung des Batteriedeckels zu nutzen.

Eine besonders einfache Ausführungsform sieht vor, dass das mindestens eine Anschlusspolelement eine vom Anschlusspolelement in Richtung Batteriedeckel hervorragende und zur Oberseite des Batteriedeckels angeschrägte Anschlussflanke am Umfang des Anschlusspolelementes hat und Kunststoff auf der geneigten Oberseite der Anschlussflanke aufliegt. Durch die vom Anschlusspolelement weg in Richtung zur Unterseite schräg verlaufende Anschlussflanke wird erreicht, dass auf der Oberseite der Anschlussflanke aufliegender Kunststoff beim Schrumpfen immer ohne Belassung eines Spalts bündig in die Anschlussflanke übergeht.

Eine weitere Ausführungsform sieht einen umlaufenden Einstich in dem an die Oberseite des Batteriedeckels angrenzenden Bereich des Anschlusspolelementes zur Aufnahme von Kunststoff vor. Der in dem Einstich bei der Spritzgussfertigung vorhandene Kunststoff füllt auch bei Volumenreduktion diesen immer noch ausreichend aus, um einen spaltfreien, bündigen Anschluss des Batteriedeckels an das Anschlusspolelement sicherzustellen.

Eine andere Ausführungsform sieht einen widerhakenförmigen Hinterschnitt einer am Umfang des Anschlusspolelementes hervorragenden Anschlussflanke zur Aufnahme von Kunststoff im Hinterschnitt und Vermeidung eines Spalts zwischen Anschlusspolelement und Oberseite des Batteriedeckels vor. Auch wird durch den widerhakenförmigen Hinterschnitt sichergestellt, dass sich in dem Hinterschnitt ansammelnder Kunststoff bei der Spritzgussfertigung nach der Volumenreduktion immer noch mindestens teilweise im Hinterschnitt verbleibt und aufgrund des Schrumpfes des Kunststoffs ein spaltfreier Anschluss des Kunststoff-Batteriedeckels an das Anschlusspolelement sichergestellt wird.

Als vorteilhaft hat es sich auch herausgestellt, wenn die Außenfläche des Anschlusspolelements nicht metallisch blank, sondern aufgerauht ist. Hierzu kann die Außenfläche beispielsweise gewellt, gerillt, geschuppt oder vernarbt sein. Der nach VDI-Richtlinie bestimmte optimale Rauhigkeitsgrad sollte in dem Bereich der Rauhigkeitsstufen 36 bis 50 und bevorzugt von 39 bis 42 liegen.

Es ist aber auch denkbar, jeweils einen auf den Umfang des zugeordneten Anschlusspolelementes aufgepressten separaten Kunststoffring vorzusehen, um einen Abstand eines Ringspalts zwischen Kunststoff-Batteriedeckel und Anschlusspolelement sicherzustellen. Der aufgrund der Volumenreduktion von Kunststoff bei der Spritzgussfertigung problematische Anschlussbereich zwischen Kunststoff-Batteriedeckel und Anschlusspol wird somit an den Außenumfang des ringförmigen Abstandshalters aus Kunststoff verlegt.

Bei den vorgenannten Ausführungsformen kann die Anschlussflanke als Verdrehschutz mit zwei oder mehr am Umfang des Anschlusspolelementes vorstehenden Fingern ausgebildet sein. D.h., dass durch konstruktive Ausgestaltung des Verdrehschutzes ein Spalt am Übergang zwischen Kunststoff-Batteriedeckel und Anschlusspolelement verhindert wird.

Alternativ hierzu kann aber auch eine ringförmige, dem Pol umgebende Kunststoffwulst als Teil des Batteriedeckels mit einer Größe von etwa 0,5 bis 1,5 mm vorgesehen sein. Diese integral mit dem Batteriedeckel bei der Spritzgussfertigung erstellte Kunststoffringwulst grenzt an das zugeordnete Anschlusspolelement an und umschließt dieses. Vorteilhaft kann der Kunststoffringwulst Schlitze aufweisen.

Damit sich innerhalb dieses Ringbereiches keine Feuchtigkeit ansammelt bzw. aufstaut, ist es vorteilhaft, wenn die Ringwulst an mindestens einer Stelle geschlitzt ist. Vorteilhaft sind mindestens ca. 2 mm breite Schlitze in Verbindung mit einer zur Kunststoffringwulst geneigten, also leicht kegeligen Innenfläche. Neben den Ringwulstelementen sind auch halbkugelartige Abstandshalter denkbar.

Die Erfindung wird nachfölgend mit Ausführungsbeispielen anhand der beigefügten Zeichnungen näher erläutert. Es zeigen:
- Figur 1 -: Schnitt-Ausschnittsansicht eines Batteriedeckels mit einem angeschrägte Anschlussflanken aufweisenden Anschlusspolelement;
- Figur 2 -: Schnitt-Ausschnittsansicht eines Batteriedeckels mit Einstich in das Anschlusspolelement und vergrößerte Ausschnittsdarstellung des Einstichs;
- Figur 3 -: Schnitt-Ausschnittsansicht eines Batteriedeckels mit einer widerhakenförmig hinterschnittenen Anschlussflanke eines Anschlusspolelements;
- Figur 4 -: Schnitt-Ausschnittsansicht eines Batteriedeckels mit auf den Umfang des Anschlusspolelementes aufgepresstem Kunststoffring;
- Figur 5 -: Schnitt-Ausschnittsansicht eines Batteriedeckels mit halbkugelartigen Abstandshaltern am Anschlusspolelement und der Oberseite des Batteriedeckels
- Figur 6 -: Ausschnittsansicht aus Figur 5 als Draufsicht auf die halbkugelartigen Abstandshalter,

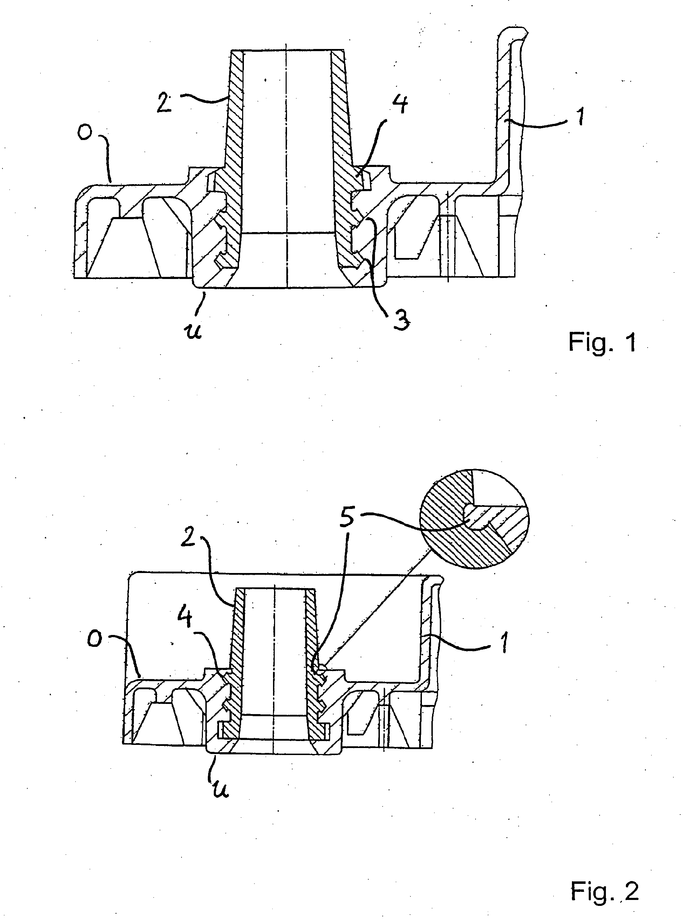

Die Figur 1 lässt eine Schnitt-Ausschnittsansicht eines Batteriedeckels 1 erkennen, der aus Polypropylen PP in Spritzgusstechnik hergestellt ist. Bei der Spritzgussfertigung wird ein Anschlusspolelement 2 in Form einer Polhülse in den Batteriedeckel 1 eingespritzt. Das Anschlusspolelement 2 hat umlaufende Vorsprünge 3 mit widerhakenförmigem Profil. Im Bereich der Batterieaußenfläche ist eine umlaufende Anschlussflanke 4 vorgesehen, die gleichzeitig einen Verdrehschutz ausbildet. Hierzu ist die Anschlussflanke 4 mit zwei oder mehr vom Umfang des Anschlusspolelementes 2 vorstehenden Fingern ausgebildet.

Die Anschlussflanke 4 hat eine vom Anschlusspolelement 2 in Richtung der Unterseite u des Batteriedeckels geneigte, d.h. angeschrägte Oberfläche, so dass auf der Oberfläche aufliegender Kunststoff des Batteriedeckels 1 bei der im Spritzgussfertigungsvorgang auftretenden Volumenreduktion auf der geneigten Oberfläche der Anschlussflanke 4 nach unten wandert. Aufgrund der geneigten Form der Anschlussflanke 4 wird dabei sichergestellt, dass an der Oberseite O des Batteriedeckels 1 ein spaltfreier Übergang zwischen dem Kunststoff des Batteriedeckels 1 und der Anschlussflanke 4 besteht.

Die Figur 2 lässt eine andere Ausführungsform erkennen, bei dem angrenzend an eine widerhakenförmige Anschlussflanke 4 ein Einstich 5 vorgesehen ist, der um den gesamten Außenumfang des Anschlusspolelementes 2 herum läuft. Bei der Spritzgussfertigung dringt Kunststoff in den Einstich 5 ein und verhakt sich bei dem Schrumpfungsprozess in der Spritzgussfertigung dort, so dass ein spaltfreier Übergang zwischen Anschlusspolelement 2 und Oberseite des Batteriedeckels sichergestellt ist.

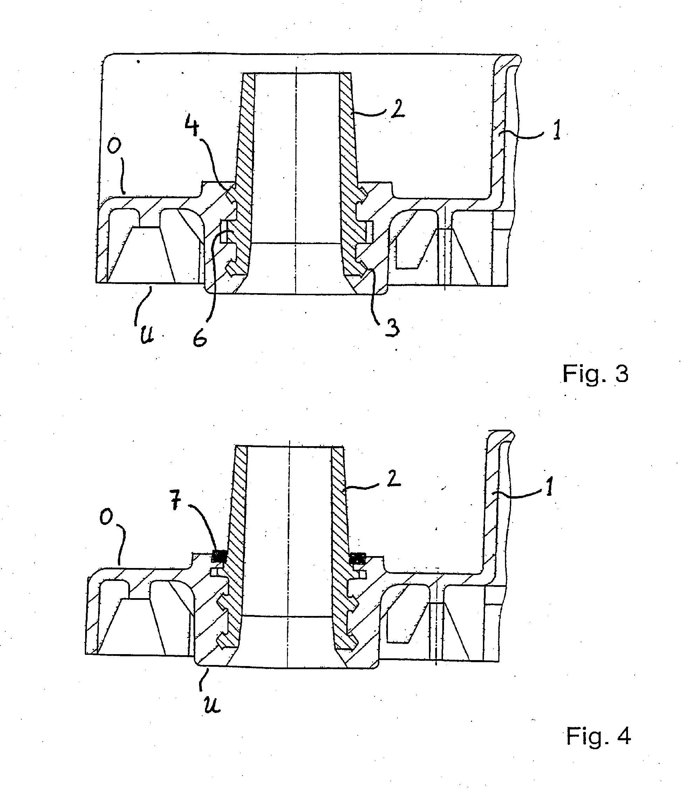

Die Figur 3 lässt eine andere Ausführungsform erkennen, bei der lediglich eine vom Kunststoff-Batteriedeckels 1 an der Oberseite O abgedeckte Anschlussflanke 4 mit widerhakenförmigem Profil vorgesehen ist. Durch das widerhakenförmige Profil verhakt sich der Kunststoff auch im Schrumpfungsprozess in der Trennlinie zwischen Anschlusspolelement 2 und Anschlussflanke 4, so dass wiederum ein spaltfreier Übergang zwischen Anschlusspolelement 2 und Kunststoff-Batteriedeckel 1 an der Batterieaußenseite sichergestellt ist.

Der Batterieschutz 6 ist von der Oberseite 0 des Batteriedeckels 1 in den mittleren Bereich zwischen Oberseite 0 und Unterseite U des Batteriedeckels 1 verlegt.

Die Figur 4 lässt eine Schnitt-Ausschnittsansicht einer anderen Ausführungsform eines Batteriedeckels 1 erkennen, bei dem ein Kunststoff-Ring 7 auf das Anschlusspolelement 2 aufgepresst ist. Dieser Kunststoffring 7 steht von der Oberseite des Batteriedeckels 1 um etwa 0,5 bis 1,5 mm hervor und bildet damit einen ringförmigen Abstandhalter. Der kritische Bereich der Trennlinie zwischen Anschlusspolelement 2 und Kunststoff-Batterie mit Deckel 1 ist durch den Kunststoffring 7 an den Außenumfang des Kunststoffrings 7 verlegt.

Damit sich innerhalb des Ringbereiches keine Feuchtigkeit ansammelt bzw. aufstaut, ist es vorteilhaft, wenn der Kunststoffring 7 an mindestens einer Stelle geschlitzt ist. Vorzugsweise sind hier zumindest ca. 2 mm breite Schlitze in Verbindung mit einer zum Kunststoffring 7 geneigten, also leicht kegeligen Innenfläche vorgesehen.

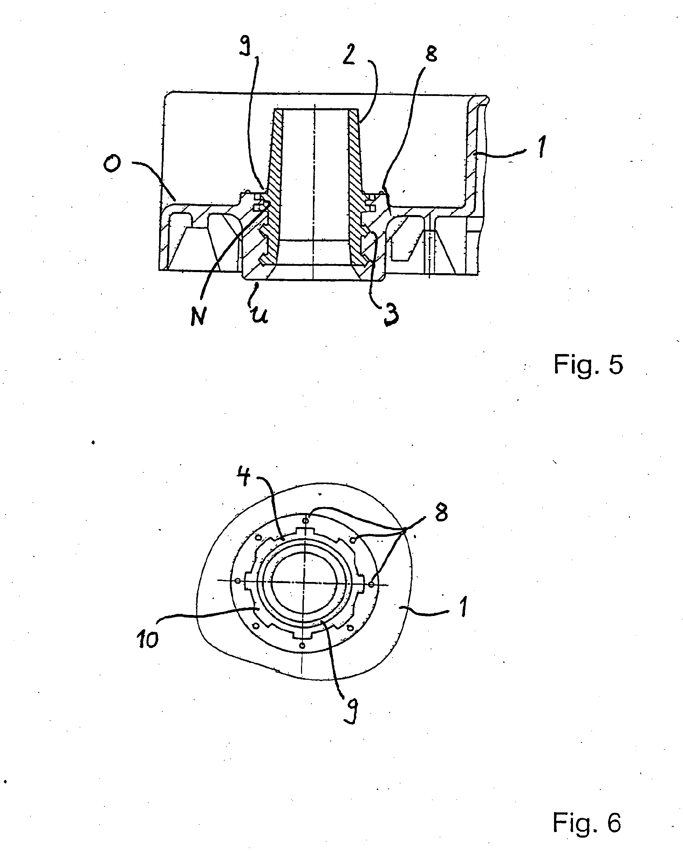

Die Figur 5 lässt eine andere Ausführungsform des Batteriedeckel I in Schnitt-Ausschnittsansicht erkennen. Anstelle eines Ringwulstelementes, d.h. des Kunststoffrings 7 aus der Figur 4, sind im Abstand voneinander auf einem Kreisumfang an der Oberseite O des Batteriedeckels 1 halbkugelartige Abstandshalter 8 aus Kunststoff integral mit dem Kunststoff-Batteriedeckel 1 ausgeformt, Gleichermaßen sind an dem Anschlusspolelement 2 wulstartige Abstandshalter 9 angeordnet. Damit wird ein direkter mechanischer Kontakt von auf die Anschlusspole aufgeklemmten Polklemmen mit möglicher in einem Spalt zwischen Anschlusspolelement 2 und Kunststoff-Batteriedeckel 1 befindlichem Elektrolyt verhindert und damit eine Polklemmenkorrosion vermieden bzw, verzögert.

Weiterhin ist eine am Außenumfang der Anschlussflanke 4 umlaufende Nut N erkennbar, in die Kunststoff bei der Spritzgussfertigung eindringt, so dass die Tiefe eines möglicherweise entstehenden Spalts an der Trennlinie zwischen Metall und Kunststoff verringert wird. Das Einbringen der Nut N kann auch separat oder in Verbindung mit anderen Ausführungsformen erfolgen.

Die Figur 6 lässt eine Draufsicht auf einen Ausschnitt des Batteriedeckels 1 im Bereich des Anschlusspolelementes 2 erkennen. Es wird deutlich, dass die halbkugel-artigen Abstandshalter 8 im Abstand voneinander auf einem Kreisumfang als integraler Teil des Kunststoff-Batteriedeckels 1 ausgeformt sind. Aus der Draufsicht der Figur 6 sind auch die einen Verdrehschutz bildenden Finger 10 der Anschlussflanke 4 erkennbar.

## Patentansprüche

1. Kunststoff-Batteriedeckel (1) zum Verschließen eines Batteriegehäuses mit einer im auf das Batteriegehäuse aufgesetzten Zustand in das Batteriegehäuse weisenden Unterseite (U) und einer gegenüberliegenden Oberseite (0), und mit mindestens einem durch den Batteriedeckel (1) geführten metallischen Anschlusspolelement (2), wobei jeweils vom Umfang eines Anschlusspolelementes (2) eine Anschlussflanke (4) hervorragt, die angrenzend an die Oberseite (O) des Batteriedeckels (1) angeordnet ist, ***dadurch gekennzeichnet, dass*** die genannte Anschlussflanke (4) an ihrer radialen Umfangsfläche eine mindestens teilweise umlaufende Nut (N) hat.

2. Kunststoff-Batteriedeckel (1) nach Anspruch 1, ***dadurch gekennzeichnet, dass*** das mindestens eine Anschlusspolelement (2) eine vom Anschlusspolelement (2) in Richtung Batteriedeckel (1) hervorragende und zur Oberseite (O) des Batteriedeckels (1) angeschrägte Anschlussflanke (4) am Umfang des Anschlusspolelementes (2) hat und Kunststoff auf der Oberseite der Anschlussflanke (4) aufliegt.

3. Kunststoff-Batteriedeckel (1) nach einem der Ansprüche 1 bis 2, **dadurch gekennzeichnet, dass** ein umlaufender Einstich im an die Oberseite (0) des Batteriedeckels (1) angrenzenden Bereich des Anschlusspolelementes (2) zur Aufnahme von Kunststoff und Vermeidung eines Spalts zwischen Anschlusspolelement (2) und Oberseite (O) des Batteriedeckels (1) vorgesehen ist.

4. Kunststoff-Batteriedeckel (1) nach einem der vorhergehenden Ansprüche, **gekennzeichnet durch** einen widerhakenförmigen Hinterschnitt einer am Umfang des Anschlusspolelementes (2) hervorragende Anschlussflanke (4) zur Aufnahme von Kunststoff im Hinterschnitt und Vermeidung eines Spalts zwischen Anschlusspolelement (2) und Oberseite (O) des Batteriedeckels (1).

5. Kunststoff-Batteriedeckel (1) nach einem der Ansprüche 2 bis 4, **dadurch gekennzeichnet, dass** die Anschlussflanken (4) als Verdrehschutz mit zwei oder mehr vom Umfang des Anschlusspolelementes (2) vorstehenden Fingern (10) ausgebildet ist.

6. Kunststoff-Batteriedeckel (1) nach einem der Ansprüche 2 bis 5, **dadurch gekennzeichnet, dass** die Außenfläche der Anschlussflanke (4) ganz oder teilweise aufgerauht ist.

7. Kunststoff-Batteriedeckel (1) nach Anspruch 6, **dadurch gekennzeichnet, dass** die Außenfläche der Anschlussflanke (4) gewellt, gerillt, geschuppt oder vernarbt ist.

8. Kunststoff-Batteriedeckel (1) nach einem der vorhergehenden Ansprüche, **gekennzeichnet durch** jeweils einen auf dem Umfang des Anschlusspolelementes (2) aufgepressten separaten Kunststoffring (7), wobei der Kunststoff bei der Spritzgussfertigung an den an der Oberseite (O) des Batteriedeckels (1) angeordneten Kunststoffring (7) angespritzt ist.

9. Kunststoff-Batteriedeckel (1) nach einem der vorhergehenden Ansprüche, **gekennzeichnet durch** einen in den mittleren Bereich zwischen Oberseite (O) und Unterseite (U) des Batteriedeckels (1) verlegten Verdrehschutz mit zwei oder mehr vom Umfang des Anschlusspolelementes (2) vorstehenden Fingern (10).

10. Kunststoff-Batteriedeckel (1) nach einem der vorhergehenden Ansprüche, **gekennzeichnet durch** einen integral mit dem Batteriedeckel (1) bei der Spritzgussfertigung erstellten Kunststoffringwulst unmittelbar angrenzend an ein zugeordnetes Anschlusspolelement (2), wobei der Ringwulst das Anschlusspolelement (2) umschließt und an der Oberseite (O) des Batteriedeckels (1) angeordnet ist.

11. Kunststoff-Batteriedeckel (1) nach Anspruch 10, **dadurch gekennzeichnet, dass** der Kunststoffringwulst Schlitze aufweist.

12. Kunststoff-Batteriedeckel (1) nach einem der vorhergehenden Ansprüche, **dadurch gekennzeichnet, dass** das mindestens eine Anschlusspolelement (2) eine Polhülse zur Aufnahme eines Anschlusspolzylinders ist.

13. Bleibatterie mit einem in Zellen unterteilten Kunststoffgehäuse, einer Vielzahl von Elektrodenplatten in den Zellen des Kunststoffgehäuses und mit Elektrolyt in den Zellen, **dadurch gekennzeichnet, dass** das Kunststoffgehäuse mit einem Kunststoff-Batteriedeckel (1) nach einem der vorhergehenden Ansprüche abgeschlossen ist und die Elektroden mit einem negativen und einem positiven Anschlusspol elektrisch kontaktiert sind.

## Claims

1. A plastic battery cover (1) for closing a battery housing having a lower side (U) facing the battery housing when fitted on the battery housing, an oppositely positioned upper side (0), and at least one metallic connecting pole element (2) extending through the battery cover (1), wherein a connecting flank (4) arranged adjacent the upper side (0) of the battery cover (1) respectively projects from the circumference of a connecting pole element (2),
**characterized in that**
said connecting flank (4) has an at least partially circumferential groove (N) on its radially outer circumference.

2. The plastic battery cover (1) according to claim 1,
**characterized in that**
the at least one connecting pole element (2) has a connecting flank (4) on the circumference of the connecting pole element (2) which projects from said connecting pole element (2) toward the battery cover (1) and is beveled with respect to the upper side (0) of the battery cover (1), with plastic bearing on the upper side of the connecting flank (4).

3. The plastic battery cover (1) according to one of claims 1 or 2,
**characterized in that**
a circumferential recess is provided in the region of the connecting pole element (2) adjoining the upper side (0) of the battery cover (1) for accommodating plastic and preventing a gap between the connecting pole element (2) and the upper side (0) of the battery cover (1).

4. The plastic battery cover (1) according to any one of the preceding claims,
**characterized in that**
a barb-shaped undercut of a connecting flank (4) projecting from the circumference of the connecting pole element (2) for accommodating plastic in the undercut and preventing a gap between the connecting pole element (2) and the upper side (O) of the battery cover (1).

5. The plastic battery cover (1) according to any one of claims 2 to 4,
**characterized in that**
the connecting flank (4) is configured with two or more fingers (10) protruding from the circumference of the connecting pole element (2) to prevent rotation.

6. The plastic battery cover (1) according to any one of claims 2 to 5,
**characterized in that**
the outer surface of the connecting flank (2) is fully or partially roughened.

7. The plastic battery cover (1) according to claim 6,
**characterized in that**
the outer surface of the connecting flank (4) is corrugated, fluted, scaled or pitted.

8. The plastic battery cover (1) according to any one of the preceding claims,
**characterized by**
a separate plastic ring (7) respectively pressed on the circumference of the connecting pole element (2), wherein the plastic of the plastic ring (7) is molded onto the upper side (0) of the battery cover (1) by injection molding.

9. The plastic battery cover (1) according to any one of the preceding claims,
**characterized by**
anti-rotation protection having two or more fingers (10) protruding from the circumference of the connecting pole element (2) arranged in the middle area between the upper side (0) and lower side (U) of the battery cover (1).

10. The plastic battery cover (1) according to any one of the preceding claims,
**characterized by**
a plastic annular bead integrally formed by injection molding with the battery cover (1) immediately adjacent an associated connecting pole element (2), wherein the annular bead encloses the connecting pole element (2) and is arranged on the upper side (0) of the battery cover (1).

11. The plastic battery cover (1) according to claim 10,
**characterized in that**
the plastic annular bead comprises slots.

12. The plastic battery cover (1) according to any one of the preceding claims,
**characterized in that**
the at least one connecting pole element (2) is a terminal sleeve for receiving a connecting pole cylinder.

13. A lead-acid battery comprising a plastic housing divided into cells, a plurality of electrode plates in the cells of said plastic housing and having electrolyte in the cells,
**characterized in that**
the plastic housing is closed by a plastic battery cover (1) according to any one of the preceding claims and the electrodes are electrically connected to a negative and a positive connecting pole.

## Revendications

1. Couvercle de batterie en matière plastique (1) pour refermer un boîtier de batterie, comportant une face inférieure (U) tournée vers le boîtier de batterie dans l'état posé sur le boîtier de batterie, et une face supérieure (0) opposée, et comprenant au moins un élément formant pôle de connexion métallique (2) passé à travers le couvercle de batterie (1), dans lequel un flanc de connexion (4) dépasse respectivement depuis la périphérie d'un élément formant pôle de connexion (2), flanc qui est agencé adjacent à la face supérieure (0) du couvercle de batterie (1), **caractérisé en ce que** la totalité du flanc de connexion (4) comporte une gorge au moins partiellement périphérique (N) sur sa surface périphérique radiale.

2. Couvercle de batterie en matière plastique (1) selon la revendication 1, **caractérisé en ce que** ledit au moins un élément formant pôle de connexion (2) possède un flanc de connexion (4), en saillie depuis l'élément formant pôle de connexion (2) en direction du couvercle de batterie (1) et en biseau vers la face supérieure (0) du couvercle de batterie (1), à la périphérie de l'élément formant pôle de connexion (2), et une matière plastique repose sur la face supérieure du flanc de connexion (4).

3. Couvercle de batterie en matière plastique (1) selon l'une des revendications 1 et 2, **caractérisé en ce qu'**il est prévu une entaille périphérique dans la zone adjacente à la face supérieure (0) du couvercle de batterie (1), de l'élément formant pôle de connexion (2), pour recevoir de la matière plastique et pour éviter un intervalle entre l'élément formant pôle de connexion (2) et la face supérieure (O) du couvercle de batterie (1).

4. Couvercle de batterie en matière plastique (1) selon l'une des revendications précédentes, **caractérisé par** une contre-dépouille, en forme de crochet antagoniste, d'un flanc de connexion (4) en saillie à la périphérie de l'élément formant pôle de connexion (2) pour recevoir de la matière plastique dans la contre-dépouille et éviter un intervalle entre l'élément formant pôle de connexion (2) et la face supérieure (0) du couvercle de batterie (1).

5. Couvercle de batterie en matière plastique (1) selon l'une des revendications 2 à 4, **caractérisé en ce que** les flancs de connexion (4) sont réalisés à titre de protection antirotation avec deux ou plusieurs doigts (10) en saillie depuis la périphérie de l'élément formant pôle de connexion (2).

6. Couvercle de batterie en matière plastique (1) selon l'une des revendications 2 à 5, **caractérisé en ce que** la surface extérieure du flanc de connexion (4) est rendue totalement ou partiellement rugueuse.

7. Couvercle de batterie en matière plastique (1) selon la revendication 6, **caractérisé en ce que** la surface extérieure du flanc de connexion (4) est ondulée, nervurée, en écaille ou présente des cicatrices.

8. Couvercle de batterie en matière plastique (1) selon l'une des revendications précédentes, **caractérisé par** une bague en matière plastique séparée respective (7), engagée par pressage sur la périphérie de l'élément formant pôle de connexion (2), dans lequel la matière plastique est injectée en enrobage, lors de la fabrication par moulage par injection, sur la bague en matière plastique (7) agencée sur la face supérieure (0) du couvercle de batterie (1).

9. Couvercle de batterie en matière plastique (1) selon l'une des revendications précédentes, **caractérisé par** une protection antirotation posée dans la région médiane entre la face supérieure (0) et la face inférieure (U) du couvercle de batterie, avec deux ou plusieurs doigts (10) en saillie de la périphérie de l'élément formant pôle de connexion (2).

10. Couvercle de batterie en matière plastique (1) selon l'une des revendications précédentes, **caractérisé par** un bourrelet annulaire en matière plastique réalisé de manière intégrale avec le couvercle de batterie (1) lors de la fabrication par moulage par injection, dans lequel le bourrelet annulaire enserre l'élément formant pôle de connexion (2) et est agencé à la face supérieure (O) du couvercle de batterie (1).

11. Couvercle de batterie en matière plastique (1) selon la revendication 10, **caractérisé en ce que** le bourrelet annulaire en matière plastique comporte des fentes.

12. Couvercle de batterie en matière plastique (1) selon l'une des revendications précédentes, **caractérisé en ce que** ledit au moins un élément formant pôle de connexion (2) est une douille polaire pour recevoir un cylindre formant pôle de connexion.

13. Batterie au plomb comprenant un boîtier en matière plastique subdivisé en cellule, une pluralité de plaques formant électrode dans les cellules du boîtier en matière plastique, et un électrolyte dans les cellules, **caractérisée en ce que** le boîtier en matière plastique est refermé avec un couvercle de batterie en matière plastique (1) selon l'une des revendications précédentes, et les électrodes sont mises en contact électrique avec un pôle de connexion négatif et avec un pôle de connexion positif.
